# EUROPÄISCHE PATENTSCHRIFT

(11) **EP 3 838 371 B1**
(45) Veröffentlichungstag und Bekanntmachung des Hinweises auf die Patenterteilung: **07.06.2023**
(21) Anmeldenummer: 19000584.3
(22) Anmeldetag: 20.12.2019
(51) Int. Cl.: B01D 29/15, B01D 29/66, B01D 29/92

(54) **FLUIDFILTER UND VERFAHREN ZUR ABREINIGUNG EINES FLUIDFILTERS**
FLUID FILTER AND METHOD TO CLEAN A FLUID FILTER
FILTRE À FLUIDE ET PROCÉDÉ DE NETTOYAGE DE FILTRE

(43) Veröffentlichungstag der Anmeldung: 23.06.2021
(73) Patentinhaber: Lehmann, Titus, 08543 Pöhl (DE)
(72) Erfinder: Lehmann, Titus, 08543 Pöhl (DE)
(74) Vertreter: Kailuweit & Uhlemann Patentanwälte Partnerschaft mbB

(56) Entgegenhaltungen:
- EP-A1- 0 155 336
- DE-U1-202005 018 852
- DE-U1-202019 001 872
- US-A- 3 387 712

## Beschreibung

Die Erfindung betrifft ein Verfahren und eine Vorrichtung zum Rückspülen von Fluidfiltern zur Reinigung von Fluiden, insbesondere zur Feinstfilterung von Ölen, bei dem das Filterelement von außen nach innen im Filterprozess durchströmt wird und durch die angeordneten erfinderischen Merkmale für den Rückspülprozess dadurch gekennzeichnet ist, dass ein Reservoir mit gereinigtem Fluid derart gebildet wird, dass für den Rückspülprozess dieses Reservoir unter Zuhilfenahme von Druckluft schlagartig von innen nach außen durch das Filtermedium gedrückt wird und dadurch die abgereinigte Schmutzschicht gelöst und durch die dafür angeordnete Schaltungsanordnung über die sonst angeordnete Zuflusseinrichtung einem Schmutzbehälter zugeführt wird. Mit dieser erfinderischen Anordnung der technischen Elemente des Filters wird das Ziel erreicht, die Standzeit bis zum Wechseln der Filterpatrone erheblich zu verlängern.

Aus dem Stand der Technik ist eine Reihe von Filtern bekannt, die eine Feinstfilterung zum Ziel haben. Eine Abreinigung des Filtereinsatzes erfolgt vorwiegend extern außerhalb des Filters bzw. durch einen Rückspülprozess derart, dass die Strömungsrichtung des Fluids umgeschaltet wird. So wird in DE 29822113 U1 ein Spaltrohrfilter unter Schutz gestellt, bei dem durch Veränderung der Spaltweite unter Zuhilfenahme spezieller, unter Schutz gestellter Werkstoffeigenschaften, die Filterfeinheit verändert werden kann. Zur Abreinigung abgesetzter Verunreinigungen ist eine Abstreifvorrichtung angeordnet, mit deren Hilfe abgesetzte Verunreinigungen vom Spaltrohrfilter abgestreift, im unteren Teil des Filtergehäuses gesammelt und über ein Entleerungsventil einem Sammelbehälter zugeführt werden. Nachteilig hierbei ist, dass beim Abstreifen der Schmutzschicht und dem Sammeln der Schmutzschicht es beim Filtrierprozess zu einer Vermischung mit dem zu filternden Fluid kommt und durch strömungsbedingte Wirbelbildung große Teile der abgestriffenen Schmutzschicht wieder in den Filtrierprozess geleitet werden bzw. dass für den Reinigungsprozess die Filtereinheit ausgebaut und einem externen Reinigungsprozess unterzogen werden muss. In DE 102017006709 A1 wurde eine Filteranordnung aus Filterkerze mit Stützhülle unter Schutz gestellt. Hierbei ist das Filterelement von einer Stützhülle umgeben, wobei die Stützhülle aus einem dehnbaren Material besteht, schlauchförmig ausgebildet ist und über die Stützhülle gezogen wird. Nachteilig ist, dass die Stützhülle nicht als Filterelement dient und die Filterkerze nicht für einen Rückspülvorgang geeignet ist, da sonst die Stabilität des Filterelements nicht mehr gewährleistet ist. In DE202019 001 872 U1 ist eine Filterkerze geschützt, bei der ein Rückspülvorgang vorgesehen ist, wobei hierbei eine Aufdehnung der Maschenweite bewirkt wird und durch Umkehr der Strömungsrichtung des Fluides ein Schmutzabtrag aus dem Filterwerkstoff erfolgt. Nachteilig ist, dass der abgetragene Schmutz beim Rückspülprozess partiell mit dem bereits gereinigtem Fluid in Berührung kommt, wodurch eine partielle Verschmutzung des bereits gereinigtem Fluids erfolgt bzw. gereinigtes Fluid in den Schmutzraum gelangen kann. Eine weitere Abscheidevorrichtung ist unter DE 00000090 14 888.5 U1 unter Schutz gestellt. Hierbei wird das Fluid zentral zugeführt und über drei radial angeordnete Filterstufen von innen nach außen durch die angeordneten Filterelemente geleitet und zentral abgeführt. Die im Fluid enthaltenen Schmutzpartikel werden in den Filterelementen am Innenumfang zurückgehalten. Nachteilig ist, dass die Filterelemente für den Reinigungsprozess ausgebaut werden müssen um diese einzeln zu reinigen bzw. zu erneuern. Eine prozessintegrierte Reinigung ist mit dieser technischen Ausführung nicht gegeben.

Die US 3,387,712 A beschreibt einen Rohrfilter, bei dem eine zu filternde Flüssigkeit über einen Fluideinlass in ein rohrförmiges Gehäuse einströmt, durch die filternde Wand eines ebenfalls rohrförmigen Filterelements, welches sich im Inneren des rohrförmigen Gehäuses befindet, hindurchtritt und dabei gefiltert wird und als gefilterte Flüssigkeit über einen Fluidauslass abgeführt wird. Die Reinigung des Filters erfolgt mittels einer Rückspülflüssigkeit. Diese wird über den Fluidauslass in das Filterelement eingeführt, tritt durch die Wand nach außen durch und wird über den Fluideinlass abgeführt. Zur Verbesserung der Reinigungseffektivität ist im Inneren des Filterelements ein Diffuser angeordnet, der mehrere, auf einem Stab angeordnete Verdickungen aufweist. Diese Verdickungen führen zu einer verstärkten Bewegung der Reinigungsflüssigkeit in Richtung der Wand, insbesondere im oberen Teil des Filters.

Die EP 0 155 336 A beschreibt einen Filter, bei dem in einem Trübkessel eine Filterkerze als Filterelement angeordnet ist. Innerhalb der Filterkerze ist ein Rohr angeordnet, das fast bis zum Boden der Filterkerze reicht. Durch den so entstandenen Spalt wird die Fließgeschwindigkeit der gefilterten Flüssigkeit am Boden erhöht und die Ablagerung von eventuell noch vorhandenen Trübstoffen weitestgehend verhindert. Für die Beseitigung von Ablagerungen an der äußeren Oberfläche des Filters wird ein mehrteiliger Prozess ausgeführt. Dabei wird zunächst der Trüberaum über eine zusätzliche Leitung möglichst vollkommen entleert. Nach einem optionalen Waschen des Filterelements in Filtrierströmungsrichtung wird der Filter wieder entleert und der Filterkuchen im Gleichstrom getrocknet, d.h. Heißluft wird in den Trüberaum eingespeist, durch das Filterelement gepresst und durch den Filtratablauf abgeführt. Anschließend wird Druckluft über den Filtratablauf eingespeist, durch das Filterelement gepresst und der Filterkuchen damit abgeworfen. Der abgetrennte Kuchen wird über einen Bodenablass entfernt.

Eine Vielzahl weiterer beschriebener Erfindungen bezieht sich auf eine spezielle Anordnung und der dafür erforderlichen technischen Mittel zur Befestigung und Anordnung der eingesetzten Filterpatronen in ein dafür vorgesehenes Gehäuse sowie der Erfassung des Filterzustandes, vorwiegend durch sensorielle Messung des Druckunterschiedes des zugeführten Fluides zu dem abgeführten Fluid. Eine damit verbundene Integration mit einer Abreinigungstechnologie ist nicht vorgesehen bzw. mit den unter Schutz gestellten technischen Merkmalen der Erfindung nicht gegeben.

Der Erfindung liegt die Aufgabe zu Grunde, ein Verfahren und eine Vorrichtung zu schaffen mit der es möglich wird, die technischen Elemente des Filters und den Strömungsverlauf des Fluides so zu gestalten, dass ein Rückspülprozess zur Abreinigung der am Filterelement abgesetzten Schmutzpartikel effektiv ermöglicht wird, wobei hierzu der technische und energetische Aufwand minimiert werden.

Die Aufgabe wird gelöst durch einen Fluidfilter und ein Verfahren gemäß der unabhängigen Ansprüche. Vorteilhafte Ausführungsformen sind jeweils in den abhängigen Ansprüchen wiedergegeben.

Erfindungsgemäß wird die Aufgabe dadurch gelöst, dass in einem Gehäuse **(1)** des Fluidfilters **(18)** ein bodenseitiger Fluideinlass **(7)** und ein Fluidauslass **(8),** ein Filterelement **(5)** mit einem innen angeordneten Stützkörper **(9)** angeordnet sind, wobei der Stützkörper **(9)** so ausgebildet ist, dass er umfangsseitig einen Fluiddurchlass bei einer geringen Druckdifferenz gewährleistet, boden- und stirnseitig durch einen Boden **(19)** und stirnseitig durch einen Deckel **(15)** fluiddicht verschlossen ist, wobei der Stützkörper **(9)** im Gehäuse **(1)** so angeordnet ist, dass dieser fluiddichtend mit dem Gehäusedeckel **(2)** verbunden ist und im Inneren des Stützkörpers **(9)** ein Zulaufrohr **(3)** so angeordnet ist, dass dieses vom Gehäusedeckel **(2)** aus in den Innenraum ragt und bodenseitig offen ausgelegt ist und dass zwischen dem Zulaufrohr **(3)** und dem Stützkörper **(9)** ein Fluidleitrohr **(4)** so angeordnet ist, dass der bodenseitig aus dem Zulaufrohr **(3)** austretende Fluidstrom in den Innenraum des Fluidleitrohres **(4)** geleitet wird, wobei das Fluidleitrohr **(4)** durch einen Boden **(6)** verschlossen und stirnseitig offen ist. Damit wird der Fluidstrom über den stirnseitig offenen Bereich des Fluidleitrohres **(4)** in den Innenbereich des Zulaufrohres **(3)** und somit zum Fluidauslass **(8)** geleitet.

Der Gehäusedeckel **(2)** ist hierbei so ausgebildet, dass ein Druckluftanschluss **(10)** angeordnet ist, wobei der Druckluftanschluss **(10)** so ausgebildet ist, dass die anliegende Druckluft über angeordnete Steuerungselemente aktiviert bzw. deaktiviert werden kann. Ebenso sind vorzugsweise am Fluideinlass **(7)** und Fluidauslass **(8)** geeignete Steuerungselemente vorgesehen, mit denen die Richtung des Fluidstromes für den Filterprozess bzw. den Abreinigungsprozess entsprechend geleitet werden. Um eine effektive innovative Abreinigung des Filterelementes **(5)** zu ermöglichen, ist der Fluidstrom durch die erfindungsgemäße Anordnung der Elemente so zu leiten, dass dieser über die angeordneten Steuerungselemente den Fluideinlass **(7)** schließt, den Fluidauslass (8) schließt und mit der Atmosphäre verbindet, den Schmutzauslass (12) öffnet, um das im Filter befindliche Fluid drucklos über den Schmutzauslass (12) abfließen zu lassen, und anschließend oder zeitgleich wird die am Druckluftanschluss **(10)** anliegende komprimierte Druckluft über den Drucklufteinlass **(11)** schlagartig und/ oder impulsartig zugeschaltet, dass diese die am Filterelement (5) abgesetzten Verunreinigungen von innen nach außen aus dem Filterelement (5) drückt und über den Schmutzauslass (12) abführt.

Das Fluid strömt somit über das Zulaufrohr **(3)** in das Fluidleitrohr **(4)** in den Innenraum des Stützkörpers **(9)** und somit durch das Filterelement **(5)** von innen nach außen, wobei der am Filterelement **(5)** außen abgesetzte Schmutzanteil abgelöst und mit dem Fluidstrom durch die angeordneten Steuerungselemente zum Schmutzauslass **(12)** geleitet wird. Mit diesem erfinderischen Gedanken wird das im Innenraum des Filters als Fluidreservoir (**14)** befindliche Fluid als Reinigungsreservoir, welches sich bis zur Fluidreservoir Oberkante **(13)** im Filter befindet, für den Abreinigungsprozess genutzt. Nachdem das Fluid aus dem Fluidreservoir **(14)** einschließlich mit dem abgereinigten Schmutzanteil den Schmutzauslass **(12)** verlassen hat, wird schaltungstechnisch der Schmutzaustrag **(12)** gesperrt und die Fluidströmung in Richtung der Filterwirkung als Fluideinlass **(7)** umgeschaltet und gleichzeitig der Fluidauslass **(8)** geöffnet. Eine weitere vorteilhafte Ausführung des erfindungsgemäßen Gedankens besteht darin, dass der über den Gehäusedeckel **(2)** eingeleitete Druckluftstrom pulsierend eingeleitet wird und somit pulsierend auf den am Filterelement **(5)** abgesetzten Schmutzanteil zur Wirkung kommt. Weiterhin kann es vorteilhaft sein, dass der zur Abreinigung zugeschaltete Druckluftstrom derart aktiviert wird, dass dieser schlagartig auf das Fluidreservoir **(**14) zur Wirkung gebracht wird. Eine weitere vorteilhafte Ausführung der erfindungsgemäßen Vorrichtung besteht darin, dass die Fluidströme für den Abreinigungsprozess derart gesteuert werden, dass zu Beginn dieses Prozesses zuerst das im Fluidfilter **(18)** befindliche Fluid drucklos abgelassen wird, wobei hierzu der Drucklufteinlass **(11)** und/ oder Fluidauslass **(8)** so aktiviert/ deaktiviert werden, dass eine Verbindung zur Atmosphäre besteht und am Ende dieses Ablassprozesses die Druckluft am Drucklufteinlass **(11)** zur Wirkung gebracht wird.

Das Hauptanwendungsgebiet der erfinderischen Vorrichtung und des Verfahrens zur Abreinigung ist die Feinstfilterung von Fluiden, insbesondere von Ölen mit einer integrierten effektiven Abreinigung der am Filterelement abgesetzten Verunreinigungen.

Die erfindungsgemäße Vorrichtung und das Verfahren sollen nachfolgend an einem Ausführungsbeispiel näher erläutert werden. Hierzu zeigen:
**Fig. 1****:** Schematische Darstellung der Vorrichtung in Filterwirkung
**Fig. 2****:** Schematische Darstellung der Vorrichtung im Abreinigungsvorgang

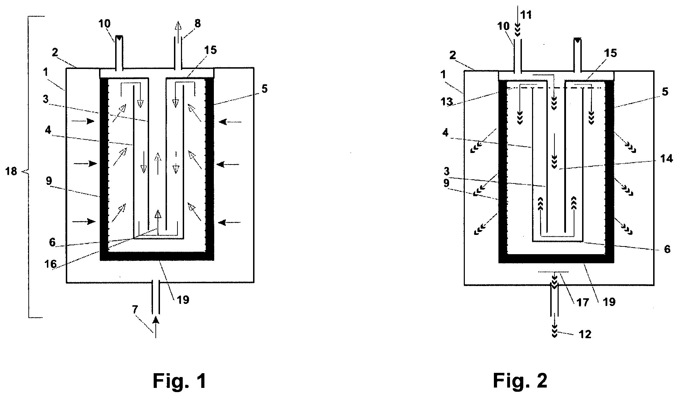

In **Fig. 1** ist die erfindungsgemäße Vorrichtung für den Filtrier- und Abreinigungsprozess mit ihren Hauptelementen dargestellt. In einem Gehäuse **(1)** des Fluidfilters **(18)** ist bodenseitig ein Fluideinlass **(7)** und ein Fluidauslass **(8),** ein Filterelement **(5)** mit einem innen angeordneten Stützkörper **(9)** angeordnet, wobei der Stützkörper **(9)** so ausgebildet ist, dass er umfangsseitig einen Fluiddurchlass bei einer geringen Druckdifferenz gewährleistet, boden- und stirnseitig durch einen Boden **(19)** und stirnseitig durch einen Deckel **(15)** fluiddicht verschlossen ist, wobei der Stützkörper **(9)** im Gehäuse **(1)** so angeordnet ist, dass dieser fluiddichtend mit dem Gehäusedeckel **(2)** verbunden ist und im Inneren des Stützkörper **(9)** ein Zulaufrohr **(3)** so angeordnet ist, dass dieses vom Gehäusedeckel **(2)** aus in dem Innenraum ragt und bodenseitig offen ausgelegt ist und dass zwischen dem Zulaufrohr **(3)** und dem Stützkörper **(9)** ein Fluidleitrohr **(4)** so angeordnet ist, dass der bodenseitig aus dem Zulaufrohr **(3)** austretende Fluidstrom in den Innenraum des Fluidleitrohres **(4)** geleitet wird, wobei das Fluidleitrohr **(4)** durch einen Boden **(6)** verschlossen und stirnseitig offen ist, damit wird der Fluidstrom über den stirnseitig offenen Bereich des Fluidleitrohres **(4)** in den Innenbereich des Zulaufrohres **(3)** und somit zum Fluidauslass **(8)** geleitet. Der Gehäusedeckel **(2)** ist hierbei so ausgebildet, dass ein Druckluftanschluss **(10)** angeordnet ist, wobei der Druckluftanschluss **(10)** so ausgebildet ist, dass dieser steuerungstechnisch aktiviert bzw. deaktiviert werden kann. Ebenso sind vorzugsweise am Fluideinlass **(7)** und Fluidauslass **(8)** geeignete Steuerungselemente vorgesehen, mit denen die Richtung des Fluidstromes für den Filterprozess bzw. den Abreinigungsprozess entsprechend geleitet werden. Im Filterprozess strömt das Fluid in der dargestellten Fluidrichtung **(16)** und um dies zu ermöglichen, ist der Fluideinlass **(7)** geöffnet und so geschaltet, dass dies ermöglicht wird, und gleichzeitig ist ebenfalls der Fluidauslass **(8)** geöffnet. Über den angeordneten Druckluftanschluss **(10)** ist der Drucklufteinlass **(11)** über die angeordnete Steuereinrichtung gesperrt. In **Fig. 2** ist die erfinderische Vorrichtung in der Stellung für den Abreinigungsprozess dargestellt. Um das erfinderische Verfahren für eine effektive innovative Abreinigung des Filterelementes **(5)** zu ermöglichen, ist der Fluidstrom durch die erfindungsgemäße Anordnung der Elemente so zu leiten, dass der Fluidstrom in der dargestellten Strömungsrichtung **(17)** geleitet wird. Hierzu wird durch geeignete Steuerungselemente der Fluidauslass **(8)** abgesperrt. Der Drucklufteinlass **(11)** ist für den Abreinigungsprozess zuerst so zu schalten, dass eine Verbindung zur Atmosphäre erfolgt. Anschließend wird der Schmutzauslass **(12)** geöffnet und das im Filter befindliche Fluid fließt über den Schmutzauslass **(12)** ab. Anschließend oder zeitgleich wird der am Druckluftanschluss **(10)** anliegende Luftstrom über den Drucklufteinlass **(11)** zugeschaltet und dieser wirkt auf die im Fluidfilter befindliche Fluidsäule derart, dass diese das im Filter bis zur Fluidreservoir Oberkante **(13)** befindliche Fluid herausdrückt. Das Fluid strömt somit über das Zulaufrohr **(3)** in das Fluidleitrohr **(4)** in den Innenraum des Stützkörpers **(9)** und somit durch das Filterelement **(5)** von innen nach außen, wobei der am Filterelement **(5)** außen abgesetzte Schmutzanteil abgelöst und mit dem Fluidstrom durch die angeordneten Steuerungselemente zum Schmutzauslass **(12)** geleitet wird. Mit diesem erfinderischen Gedanken wird das im Innenraum des Filters als Fluidreservoir (**14)** befindliche Fluid als Reinigungsreservoir, welches sich bis zur Fluidreservoiroberkante **(13)** im Filter befindet, für den Abreinigungsprozess genutzt. Nachdem das Fluid aus dem Fluidreservoir **(14)** einschließlich mit dem abgereinigtem Schmutzanteil den Schmutzauslass **(12)** verlassen hat, wird schaltungstechnisch der Schmutzauslass **(12)** gesperrt und die Fluidströmung **(17)** in Richtung der Filterwirkung als Fluideinlass **(7)** umgeschaltet, der Drucklufteinlass **(11)** wird geschlossen und gleichzeitig der Fluidauslass **(8)** geöffnet. Weiterhin kann es vorteilhaft sein, dass der zur Abreinigung zugeschaltete Druckluftstrom derart aktiviert wird, dass dieser schlagartig oder pulsierend auf das Fluidreservoir **(**14) zur Wirkung gebracht wird. Eine weitere vorteilhafte Ausführung der erfindungsgemäßen Vorrichtung besteht darin, dass die Fluidströme für den Abreinigungsprozess derart gesteuert werden, dass zu Beginn dieses Prozesses zuerst das im Fluidfilter **(18)** befindliche Fluid drucklos abgelassen wird, wobei hierzu der Drucklufteinlass **(11)** und/ oder Fluidauslass **(8)** so aktiviert/ deaktiviert werden, dass eine Verbindung zur Atmosphäre besteht und am Ende dieses Ablassprozesses die Druckluft am Drucklufteinlass **(11)** zur Wirkung gebracht wird.

### Bezugszeichenliste

1 Gehäuse
2 Gehäusedeckel
3 Zulaufrohr
4 Fluidleitrohr
5 Filterelement
6 Boden
7 Fluideinlass
8 Fluidauslass
9 Stützkörper
10 Druckluftanschluss
11 Drucklufteinlass
12 Schmutzauslass
13 Fluidreservoir Oberkante
14 Fluidreservoir
15 Deckel
16 Strömungsrichtung des Fluids im Filterprozess
17 Strömungsrichtung des Fluids für den Abreinigungsprozess
18 Fluidfilter
19 Boden

## Patentansprüche

1. Fluidfilter (18) mit
- einem um einen Stützkörper (9) in einem Gehäuse (1) angeordneten Filterelement (5), wobei der Stützkörper (9) bodenseitig durch einen Boden (19) und stirnseitig durch einen Deckel (15) fluiddicht verschlossen ist,
- einem Fluideinlass (7) und einem Fluidauslass (8), wobei der Fluideinlass (7) und der Fluidauslass (8) so angeordnet sind, dass der Fluidstrom von außen nach innen im Filtrierprozess das Filterelement (5) durchströmt,
- einem im Innenraum des Stützkörpers (9) angeordneten Zulaufrohr (3), das von oben aus in den Innenraum des Stützkörpers (9) ragt und bodenseitig offen ist, und
- einem Druckluftanschluss (10) mit einem Drucklufteinlass (11),
**dadurch gekennzeichnet, dass**
- das Zulaufrohr (3) in dem Stützkörper (9) in einem Fluidleitrohr (4) angeordnet ist, wobei das Fluidleitrohr (4) durch einen Boden (6) verschlossen und stirnseitig offen ist,
- und der Drucklufteinlass (11) geeignet ist, Druckluft auf eine Oberkante (13) eines Fluidreservoirs (14), welches im Betrieb des Fluidfilters (18) im Innenraum des Fluidfilters (18) vorhanden ist, zur Wirkung zu bringen.

2. Fluidfilter nach Anspruch 1, **dadurch gekennzeichnet, dass** Steuerungselemente am Fluideinlass (7), am Fluidauslass (8) und am Druckluftanschluss (10) angeordnet sind, die geeignet sind, den Fluideinlass (7), den Fluidauslass (8) und den Druckluftanschluss (10) zu öffnen oder zu sperren und den Fluidstrom in eine Richtung entsprechend eines Filterprozesses oder eines Abreinigungsprozesses zu leiten.

3. Fluidfilter nach einem der Ansprüche 1 und 2, **dadurch gekennzeichnet, dass** der Druckluftanschluss (10) an einem Gehäusedeckel (2) und/ oder am Gehäuse (1) angeordnet ist.

4. Fluidfilter nach einem der Ansprüche 1 bis 3, **dadurch gekennzeichnet, dass** der Druckluftanschluss (10) geeignet ist, einen zugeschalteten Druckluftstrom als Impuls auf die Fluidreservoir Oberkante (13) zur Wirkung zu bringen.

5. Fluidfilter nach einem der Ansprüche 1 bis 4, **dadurch gekennzeichnet, dass** der Druckluftanschluss (10) geeignet ist, einen zugeschalteten Druckluftstrom schlagartig zur Wirkung zu bringen.

6. Fluidfilter nach Anspruch 1 bis 5, **dadurch gekennzeichnet, dass** der Druckluftanschluss (10) und/oder der Fluidauslass (8) schaltungstechnisch geeignet sind, mit der Atmosphäre verbunden zu sein.

7. Verfahren zur Abreinigung der an einem Filterelement (5) eines Fluidfilters (18) nach einem der Ansprüche 1 bis 6 abgesetzten Verunreinigungen, **dadurch gekennzeichnet, dass** im ersten Verfahrensschritt der Fluideinlass (7) und der Fluidauslass (8) gesperrt werden sowie der Drucklufteinlass (11) verschlossen ist, im zweiten Verfahrensschritt der Fluidauslass (8) geöffnet und mit der Atmosphäre verbunden wird und/oder gleichzeitig im dritten Verfahrensschritt der Fluideinlass (7) als Schmutzauslass (12) geöffnet und im dritten Verfahrensschritt der Drucklufteinlass (11) geöffnet wird, wobei der zugeschaltete Druckluftstrom auf die Oberkante (13) des Fluidreservoirs (14), welches im Innenraum des Fluidfilters (18) vorhanden ist, zur Wirkung gebracht wird.

8. Verfahren nach Anspruch 7, **dadurch gekennzeichnet, dass** ein für den Abreinigungsprozess zugeschalteter Druckluftstrom als Impuls auf die Oberkante (13) des Fluidreservoirs (14) zur Wirkung gebracht wird.

9. Verfahren nach einem der Ansprüche 7 oder 8, **dadurch gekennzeichnet, dass** ein für den Abreinigungsprozess zugeschalteter Druckluftstrom schlagartig zur Wirkung gebracht wird.

## Claims

1. Fluid filter (18) comprising
- a filter element (5) arranged around a support body (9) in a housing (1), wherein the support body (9) is closed in a fluid-tight manner at the bottom by a base (19) and at the top by a lid (15),
- a fluid inlet (7) and a fluid outlet (8), wherein the fluid inlet (7) and the fluid outlet (8) are arranged in such a manner that the fluid flow flows through the filter element (5) from the outside to the inside in the filtering process,
- an supply pipe (3) which is arranged in the interior of the support body (9) and projects from above into the interior of the support body (9) and is open at the bottom, and
- a compressed air connection (10) having a compressed air inlet (11),
**characterised in that**
- the supply pipe (3) is arranged in the support body (9) in a fluid guide pipe (4), wherein the fluid guide pipe (4) is closed by a base (6) and is open at the top,
- and the compressed air inlet (11) is suitable for making compressed air act on an upper edge (13) of a fluid reservoir (14) which is present in the interior of the fluid filter (18) during operation of the fluid filter (18).

2. Fluid filter according to claim 1, **characterised in that** control elements are arranged at the fluid inlet (7), at the fluid outlet (8) and at the compressed air connection (10) and are suitable for opening or blocking the fluid inlet (7), the fluid outlet (8) and the compressed air connection (10) and for guiding the fluid flow in a direction corresponding to a filtering process or a cleaning process.

3. Fluid filter according to either claim 1 or claim 2, **characterised in that** the compressed air connection (10) is arranged on a housing lid (2) and/or on the housing (1).

4. Fluid filter according to any of claims 1 to 3, **characterised in that** the compressed air connection (10) is suitable for making a connected compressed air flow act as a pulse on the fluid reservoir upper edge (13).

5. Fluid filter according to any of claims 1 to 4, **characterised in that** the compressed air connection (10) is suitable for making a connected compressed air flow act suddenly.

6. Fluid filter according to claims 1 to 5, **characterised in that** the compressed air connection (10) and/or the fluid outlet (8) are suitable in terms of circuitry for being connected to the atmosphere.

7. Method for cleaning off the impurities deposited on a filter element (5) of a fluid filter (18) according to any of claims 1 to 6, **characterised in that** in the first method step the fluid inlet (7) and the fluid outlet (8) are blocked and the compressed air inlet (11) is closed, in the second method step the fluid outlet (8) is opened and connected to the atmosphere and/or, at the same time, in the third method step the fluid inlet (7) is opened as a dirt outlet (12) and in the third method step the compressed air inlet (11) is opened, wherein the connected compressed air flow is made to act on the upper edge (13) of the fluid reservoir (14) which is present in the interior of the fluid filter (18).

8. Method according to claim 7, **characterised in that** a compressed air flow connected for the cleaning process is made to act as a pulse on the upper edge (13) of the fluid reservoir (14).

9. Method according to either claim 7 or claim 8, **characterised in that** a compressed air flow connected for the cleaning process is made to act suddenly.

## Revendications

1. Filtre de fluide (18) comportant
- un élément de filtre (5) disposé autour d'un corps de support (9) dans un boîtier (1), le corps de support (9) étant fermé de manière étanche aux fluides du côté du fond par un fond (19) et du côté avant par un couvercle (15),
- une entrée de fluide (7) et une sortie de fluide (8), l'entrée de fluide (7) et la sortie de fluide (8) étant disposées de telle manière que l'écoulement de fluide s'écoule à travers l'élément de filtre (5) de l'extérieur vers l'intérieur dans le processus de filtrage,
- une conduite d'alimentation (3) disposée à l'intérieur du corps de support (9) et qui fait saillie par le haut dans l'espace intérieur du corps de support (9) et est ouverte du côté du fond, et
- un raccord d'air comprimé (10) comportant une entrée d'air comprimé (11),
**caractérisé en ce que**
- la conduite d'alimentation (3) est disposée dans le corps de support (9) dans un tube de guidage de fluide (4), le tube de guidage de fluide (4) étant fermé par un fond (6) et ouvert du côté avant,
- et l'entrée d'air comprimé (11) est adaptée pour faire agir de l'air comprimé sur un bord supérieur (13) d'un réservoir de fluide (14) qui, pendant le fonctionnement du filtre de fluide (18), est présent dans l'espace intérieur du filtre de fluide (18).

2. Filtre de fluide selon la revendication 1, **caractérisé en ce que** des éléments de commande sont disposés au niveau de l'entrée de fluide (7), au niveau de la sortie de fluide (8) et au niveau du raccord d'air comprimé (10), lesquels éléments de commande sont adaptés pour ouvrir ou fermer l'entrée de fluide (7), la sortie de fluide (8) et le raccord d'air comprimé (10) et pour conduire l'écoulement de fluide dans une direction correspondant à un processus de filtrage ou à un processus de nettoyage.

3. Filtre de fluide selon l'une des revendications 1 et 2, **caractérisé en ce que** le raccord d'air comprimé (10) est disposé au niveau d'un couvercle de boîtier (2) et/ou au niveau du boîtier (1).

4. Filtre de fluide selon l'une des revendications 1 à 3, **caractérisé en ce que** le raccord d'air comprimé (10) est adapté pour faire agir un courant d'air comprimé mis en circuit sous forme d'impulsion sur le bord supérieur (13) du réservoir de fluide.

5. Filtre de fluide selon l'une des revendications 1 à 4, **caractérisé en ce que** le raccord d'air comprimé (10) est adapté pour faire agir brusquement un courant d'air comprimé mis en circuit.

6. Filtre de fluide selon les revendications 1 à 5, **caractérisé en ce que** le raccord d'air comprimé (10) et/ou la sortie de fluide (8) sont adaptés selon la technique des circuits pour être reliés à l'atmosphère.

7. Procédé de nettoyage des impuretés déposées au niveau d'un élément de filtre (5) d'un filtre de fluide (18) selon l'une des revendications 1 à 6, **caractérisé en ce que**, dans la première étape de procédé, l'entrée de fluide (7) et la sortie de fluide (8) sont verrouillées et l'entrée d'air comprimé (11) est fermée, dans la deuxième étape de procédé, la sortie de fluide (8) est ouverte et reliée à l'atmosphère et/ou, simultanément, dans la troisième étape de procédé, l'entrée de fluide (7) est ouverte en tant que sortie de salissures (12) et, dans la troisième étape de procédé, l'entrée d'air comprimé (11) est ouverte, le courant d'air comprimé mis en circuit étant amené à agir sur le bord supérieur (13) du réservoir de fluide (14) qui est présent dans l'espace intérieur du filtre de fluide (18).

8. Procédé selon la revendication 7, **caractérisé en ce qu'**un courant d'air comprimé mis en circuit pour le processus de nettoyage est amené à agir sous forme d'impulsion sur le bord supérieur (13) du réservoir de fluide (14).

9. Procédé selon l'une des revendications 7 ou 8, **caractérisé en ce qu'**un courant d'air comprimé mis en circuit pour le processus de nettoyage est amené à agir brusquement.
